(19) Europäisches Patentamt
European Patent Office
Office européen des brevets

(11) **EP 4 421 750 A1**

(12) **EUROPEAN PATENT APPLICATION**

(43) Date of publication:
**28.08.2024 Bulletin 2024/35**

(21) Application number: **23212972.6**

(22) Date of filing: **29.11.2023**

(51) International Patent Classification (IPC):
**G06T 19/20** (2011.01) **G06N 3/00** (2023.01)

(52) Cooperative Patent Classification (CPC):
**G06T 19/20; G06N 3/00; G06T 15/06; G06T 17/00;**
G06T 2219/2021

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.02.2023 US 202318114975**

(71) Applicants:
• **Fujitsu Limited**
**Kawasaki-shi, Kanagawa 211-8588 (JP)**
• **CARNEGIE MELLON UNIVERSITY**
**Pittsburgh, Pennsylvania 15213 (US)**

(72) Inventors:
• **YU, Heng**
**Sunnyvale, CA, 94085 (US)**
• **JULIN, Joel**
**Sunnyvale, CA, 94085 (US)**
• **MILACSKI, Zoltán Ádám**
**Sunnyvale, CA, 94085 (US)**
• **NIINUMA, Koichiro**
**Sunnyvale, CA, 94085 (US)**
• **JENI, Laszlo**
**Sunnyvale, CA, 94085 (US)**

(74) Representative: **Hoffmann Eitle**
**Patent- und Rechtsanwälte PartmbB**
**Arabellastraße 30**
**81925 München (DE)**

(54) **AVATAR CONTROL**

(57)     In an example, a method may include deforming a first ray associated with a dynamic object at a first time using a first neural network and a latent code to obtain a deformed ray. The method may also include obtaining a hyperspace code associated with the first ray by inputting the first ray, the first time, and the latent code into a second neural network. The method may further include sampling one or more points from the deformed ray. The method may also include combining the sampled points and the hyperspace code into a network input. The method may further include inputting the network input into a third neural network to obtain RGB values for rendering images of a three-dimensional scene representative of the dynamic object at a second time.

*100*

*FIG. 1*

**Description**

FIELD

The embodiments discussed in the present disclosure are related to avatar control.

BACKGROUND

Machine vision continues to make progress in functionality and accuracy, including with respect to making determinations about 3D objects using 2D observations. Some implementations of various neural networks may be computationally complex, which may result in long rendering times and/or poor representations of the 3D objects. For example, some neural networks may make determinations pixel-by-pixel from a 2D object to transform the 2D object into a 3D representation.

The subject matter claimed herein is not limited to embodiments that solve any disadvantages or that operate only in environments such as those described above. Rather, this background is only provided to illustrate one example technology area where some embodiments described herein may be practiced.

SUMMARY

According to an aspect of an embodiment, a method may include deforming a first ray associated with a dynamic object at a first time using a first neural network and a latent code to obtain a deformed ray. The method may also include obtaining a hyperspace code associated with the first ray by inputting the first ray, the first time, and the latent code into a second neural network. The method may further include sampling one or more points from the deformed ray. The method may also include combining the sampled points and the hyperspace code into a network input. The method may further include inputting the network input into a third neural network to obtain RGB values for rendering images of a three-dimensional scene representative of the dynamic object at a second time.

The object and advantages of the embodiments will be realized and achieved at least by the elements, features, and combinations particularly pointed out in the claims.

Both the foregoing general description and the following detailed description are given as examples and are explanatory and are not restrictive of the invention, as claimed.

BRIEF DESCRIPTION OF THE DRAWINGS

Example embodiments will be described and explained with additional specificity and detail through the use of the accompanying drawings in which:

FIG. 1 is a block diagram of an example environment configured to support avatar control;
FIG. 2 is a block diagram of another example environment configured to support avatar control;
FIG. 3 is a block diagram of an example environment configured to support training a neural network that may be used with avatar control;
FIG. 4 is a flowchart of an example method of avatar control;
FIG. 5 is a flowchart of an example method of controllable attribute inputs associated with avatar control; and
FIG. 6 illustrates an example computing system that may be used for avatar control.

DESCRIPTION OF EMBODIMENTS

Machine vision and/or representation of objects using machine vision has made significant progress in recent years. For example, three dimensional (3D) objects and/or scenes (referred to collectively as "objects" unless explicitly referred to otherwise) may be modeled and/or represented through a machine vision system observing and interpreting two dimensional (2D) images of the object. In some circumstances, machine vision systems implement one or more machine learning systems to observe objects in 2D and generate 3D representations thereof. Many 3D representations of 2D objects may be based on static objects such that the 3D representation is also static. Improvements have been introduced to increase the functionality and/or computing time of machine vision systems relative to the static objects, but machine vision handling of dynamic objects (e.g., objects that may move or be in motion) may include additional computational complexity relative to static objects (e.g., objects that are not moving).

In some circumstances, a Light Field Network (LFN) may be used in a machine vision system to represent 3D objects from 2D observations. For example, an LFN may include a representation of both geometry and appearance of the underlying 3D scene in a 360-degree, four-dimensional light field that is parameterized via a neural implicit representation. Further, an LFN may preferably be used with static objects that may include rigid deformities therein. For example, a 3D object that changes dynamically in time and/or a related perspective of an image capturing device that changes relative to the object may introduce non-rigid deformities that may not be represented and/or may be inaccurately represented by the LFN.

In some prior approaches, methods associated with applying an LFN to dynamic objects and representing the dynamic objects in a 3D representation may have included sampling multiple points (e.g., pixels) from the 2D representation, determining individual rays from the multiple points, and integrating over at least a portion of the rays using a multi-layer perceptron to approximate pixel color for the 3D representation. Other prior methods included using an LFN and replacing the integration step with a direct ray-to-color regression. In general, such prior approaches often struggled to handle the representation of a dynamic object, and in instances in which a dynamic object was represented, the associated processing time for the system was exceptionally high relative to processing time associated with representation of static objects.

In at least one embodiment of the present disclosure, a method for determining a representation of a 3D object using a 2D representation thereof may include obtaining one or more rays associated with the 3D object and deforming those rays. One or more points may be sampled from the deformed rays, combined with a hyperspace code, and input into a neural network to obtain RGB values representative of the 3D object. In some embodiments, the hyperspace code may be a multidimensional vector. In some embodiments, the sampled points from the deformed rays (e.g., as opposed to sampled points from a ray pre-deformation, or from the 2D representation of the object) may reduce a number of integrations and/or other computations in a machine vision system. By reducing such computations, a machine vision system, as described, may improve the processing time associated with obtaining RGB values for rendering images of a 3D scene that may include the 3D object, including up to an order of magnitude faster than prior implementations of machine vision systems. Alternatively, or additionally, a machine vision system of the present disclosure may be configured to capture dynamic objects and/or changes in topology, which may be associated with reducing the number of point samples, the number of integrations associated with the sampled points, and/or an overall improvement in the processing time associated with representing the object.

In these or other embodiments, the obtained RGB values representative of the 3D object may be used in the display and/or control of an avatar (where the avatar may be a rendering of the 3D object using the systems and/or methods described herein). For example, using the obtained RGB values, an avatar associated with the 3D object may be displayed on a display device and/or manipulated via user input into different views, expressions, movements, and the like (which may be correlated with a type of the 3D object, such as a human face, or an object in motion), where the avatar display and control may be based on the 3D object.

In the present disclosure, hyperspace may refer to a representation of a number of dimensional fields, which may include at least a time dimension and/or a radiance dimension. For example, a 3D ray may be converted to a 5D representation, having a 3D point associated with the 3D ray and two axis-angle ray directions. In some embodiments, the hyperspace representation, as described in the present disclosure, may support topological variations in a dynamic object to be represented and/or captured. In some embodiments, the hyperspace may represent topological variations (e.g., in 2D) of an input image, where the topological variations may include changes to features/attributes of the input image and/or where the topological variations of the hyperspace may be used to produce more realistic renderings of the input image. For example, the topological variations of the hyperspace for a human face may include changes to facial features (e.g., raised eyebrows, open mouth, pursed lips, etc.), such that the hyperspace may include many iterations of topological variations, that may be subsequently used to render a synthetic human face having realistic expressions based on the facial features in the topological variations.

Embodiments of the present disclosure will be explained with reference to the accompanying drawings.

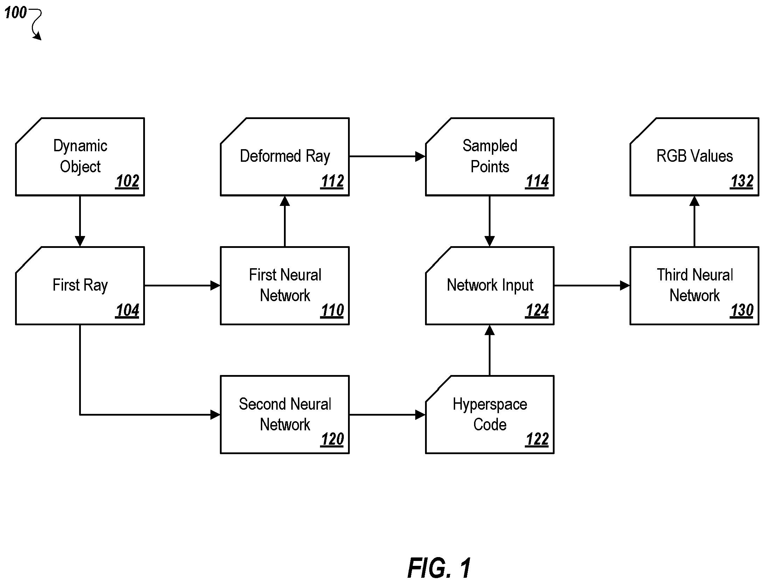

FIG. 1 is a block diagram of an example environment 100 configured to support avatar control, in accordance with at least one embodiment of the present disclosure. The environment 100 may include a first neural network 110, a second neural network 120, and a third neural network 130.

In some embodiments, the first neural network 110 and/or the second neural network 120 may be feedforward artificial neural networks, where nodes included in the first neural network 110 and/or the second neural network 120 may be acyclic. For example, the first neural network 110 and/or the second neural network 120 may include a single layer perceptron network, a multi-layer perceptron network, a directed acyclic graph network, and/or any other feedforward artificial neural network.

In some embodiments, the first neural network 110 and/or the second neural network 120 may be shallow neural networks. In the present disclosure, shallow (e.g., relative to a neural network) may be descriptive of a number of layers and/or a number of units per layer included in the neural network. For example, a shallow neural network, such as the first neural network 110 and/or the second neural network 120, may include three layers, four layers, five layers, seven layers, eight layers, ten layers, and so forth, and/or ten units per layer, sixteen units per layer, thirty units per layer, sixty-four units per layer, one hundred twenty-eight units per layer, and so forth. For example, the first neural network 110 may include seven layers and one hundred twenty-eight units per layer and the second neural network 120 may include six layers and sixty-four units per layer. In general, a shallow neural network may include any number of layers between approximately two and ten layers and any number of units per layer between approximately four and one-hundred and twenty-eight.

In some embodiments, the third neural network 130 may be a feedforward artificial neural network, where nodes included in the third neural network 130 may be acyclic. For example, the third neural network 130 may include a single layer perceptron network, a multi-layer perceptron network, a directed acyclic graph network, and/or any other feedforward artificial neural network.

In some embodiments, the third neural network 130 may be a deep residual color multi-layer perceptron regressor network. In the present disclosure, deep (e.g., relative to a neural network) may be descriptive of a number of layers and/or a number of units per layer included in the neural network. For example, a deep neural network, such as the third neural network 130 may include twenty layers, thirty layers, fifty-five layers, eighty-four layers, and so forth, and/or may include one-hundred units per layer, one-hundred and sixty units per layer, two hundred fifty-six units per layer, and so forth. For example, the third neural network 130 may include eighty-eight layers and two hundred fifty-six units per layer. In general, a deep neural network may include any number of layers greater than approximately ten layers and any number of units per layer between approximately four and three hundred.

In some embodiments, the first neural network 110 and/or the second neural network 120 may be configured to obtain one or more inputs and/or produce one or more outputs, as described herein. For example, the first neural network 110 and/or the second neural network 120 may obtain an input of a first ray (e.g., having an origin and a direction), a time associated with the first ray, and/or latent code associated with the first ray. The first neural network 110 may output a deformed ray and/or the second neural network 120 may output a hyperspace code associated with the first ray. Alternatively, or additionally, the third neural network 130 may be configured to obtain one or more inputs and/or produce one or more outputs, as described herein. For example, the third neural network 130 may obtain a combination of sampled points from a deformed ray and a hyperspace code and the third neural network 130 may output RGB values that may be used to render an image of a 3D scene that may be representative of a dynamic object associated with the first ray.

In some embodiments, a dynamic object 102 may be observed and/or recorded in motion. The dynamic object 102 may include any object that may change at least a portion thereof in time. For example, a dynamic object 102 may include a human face that changes expression (e.g., changes to the lips, eyes, eyebrows, forehead, etc.) over a period of time. Other examples of a dynamic object 102 may include a scene that includes at least a portion of the scene in motion. For example, pouring a drink (e.g., at least the liquid being poured may be in motion), peeling a banana, a person performing exercises (e.g., such as jumping jacks), and/or other animated objects.

In these or other embodiments, the dynamic object 102 may be obtained from a synthetic scene, a real scene, and/or a real controllable scene. A synthetic scene may include a dynamic object 102 that may be computer generated to include animation and/or motion. A real scene may include an object in motion captured in real-time, such as a 3D printer during operation, peeling a banana, a person exercising, and the like. A real controllable scene may include purposefully controlled animations, such as a person changing expressions in a directed or routine manner. In these or other embodiments, the dynamic object 102 may be captured as data via one or more devices used for capturing video data. For example, the dynamic object 102 may be obtained using a mobile phone camera, a digital camera, and/or other image/video capturing devices. In these and other embodiments, the video data may include multiple successive 2D images that depict successive changes to the scene captured in the 2D images.

In some embodiments, one or more rays, such as a first ray 104, may be obtained from the dynamic object 102 at various times and/or associated with various portions of the dynamic object 102. In some embodiments, the first ray 104 (and/or other rays that may be associated with the dynamic object 102) may include an origin and a direction. The origin may be associated with a pixel or other point of the dynamic object 102. Alternatively, or additionally, in addition to the origin and direction, the first ray 104 may include a first time that includes a point in time in which the first ray 104 may have been obtained.

In some embodiments, latent codes associated with the first ray 104 may be obtained from the dynamic object 102. The latent codes may be used to recreate at least a portion of the dynamic object 102 using data obtained relative to the dynamic object 102. For example, the latent codes may be used to represent and/or reconstruct a generalized portion of the dynamic object 102 from data associated with the dynamic object 102. In some embodiments, the latent codes may be related to a frame number associated with the video capture of the dynamic object 102. For example, the latent codes may be the frame number of a video of the dynamic object 102. In another example, the latent codes may be the time stamp of an individual frame of the video of the dynamic object 102.

In some embodiments, the first neural network 110 may be configured to obtain inputs of at least the first ray 104, the latent codes, and the first time (e.g., the time associated with the first ray 104). In some embodiments, the first ray 104, the latent codes, and the first time may be concatenated together, and the combination thereof may be input to the first neural network 110. The first neural network 110 may be configured to output a deformed ray 112, which may be a representation of the first ray 104 in canonical ray space. In some embodiments, the deformed ray 112 may not be a bent ray, where a bent ray may occur from sampling one or more points from the first ray 104 and obtaining a deformation relative to the sampled points. Stated another way, the first neural network 110 may accept a ray as an input and may produce a ray as an output (e.g., which may differ from a pointwise deformation of the first ray 104), where the output ray (e.g., the deformed ray 112) may be a representation of the input ray (e.g., the first ray 104) in an observational reference frame, where the observational reference frame may be the same or similar as the canonical ray space. The first neural network 110 may be configured to deform one or more input rays to be consistent with motion associated with the dynamic object 102. Alternatively, or additionally, the first neural network 110 may be configured to deform the one or more input rays such that the deformed rays may provide a representation of the dynamic object 102 from one or more arbitrary viewpoints.

In some embodiments, one or more sampled points 114 may be obtained from the deformed ray 112, which may be used as an input to the third neural network 130. In some embodiments, the sampled points 114 may be obtained randomly from the deformed ray 112 where the sampled points 114 may be randomly sampled uniformly over a time interval. In some embodiments, the number of sampled points 114 may vary based on a function of the first neural network 110. For example, during training of the first neural network 110 (as described herein), the number of sampled points 114 may be in the thousands or tens of thousands (e.g., 10,000 sampled points) and during operation of the first neural network 110 (e.g., following training of the first neural network 110), the number of sampled points 114 may be orders of magnitude lower than the number of sampled points 114 during training, such as in the tens of sampled points 114 (e.g., sixteen sampled points). In these or other embodiments, the training of the first neural network 110 may be directed to improving an accuracy of the deformed ray 112 with motion of the dynamic object 102 as represented in the first ray 104. Alternatively, or additionally, the training of the first neural network 110 may be directed to improving the representation of the dynamic object 102 by the deformed ray 112 relative to one or more various and/or arbitrary viewpoints associated with the dynamic object 102.

In some embodiments, the second neural network 120 may be configured to obtain as inputs at least the first ray 104, the latent codes, and the first time (e.g., the time associated with the first ray 104), similar to the first neural network 110. In some embodiments, the first ray 104, the latent codes, and the first time may be concatenated together, and the combination thereof may be input to the second neural network 120. The second neural network 120 may be configured to output a hyperspace code 122, which may be associated with the first ray 104 in a hyperspace. In some embodiments, the hyperspace code 122 may not be predicted for individual points of the dynamic object 102 and/or individual points associated with the first ray 104, but rather the hyperspace code 122 may be computed for the entire first ray 104 (and/or subsequently computed for any other ray(s) obtained relative to the dynamic object 102). Stated another way, the second neural network 120 may accept a ray as at least a portion of an input and may produce a hyperspace code 122 as an output (e.g., which may differ from pointwise hyperspace codes associated with the first ray 104), where the output hyperspace code (e.g., the hyperspace code 122) may be a multidimensional representation of the input ray. The output hyperspace code may include at least three dimensions associated with a physical location of the origin of the input ray and/or additional dimensional characteristics associated with the input ray, such as time, direction associated with the origin, radiance associated with the input ray, and so forth. In some embodiments, the hyperspace code 122 may be a multidimensional vector. In some embodiments, the hyperspace code 122 may be obtained from the second neural network 120 in response to receiving the first ray 104 as an input. For example, the hyperspace code 122 may be obtained using the equation:

$$w = H_\psi(o, d, t)$$

where w may be the hyperspace code 122, $H_\psi$ may be the second neural network 120 (e.g., a multilayer perceptron network), $\psi$ may be model parameters associated with the second neural network 120, $o$ may be an origin associated with the first ray 104, $d$ may be a direction associated with the first ray 104, and $t$ may be a time associated with the first 104 such as a time when the first ray 104 was obtained.

In some embodiments, the sampled points 114 may be combined with the hyperspace code 122 into a network input 124. In some embodiments, the network input 124 may be a concatenation of the sampled points 114 and the hyperspace code 122. In some embodiments, the third neural network 130 may obtain the network input 124. In some embodiments, the third neural network 130 may be configured to determine one or more RGB values 132. The RGB values 132 may be used to render one or more images of a 3D scene that may be representative of the dynamic object 102 at a time different from the first time the first ray 104 was obtained. For example, in instances in which the dynamic object 102 is a human face including changing expressions, the RGB values 132 output from the third neural network 130 may be displayed such that a synthetic human face and/or the associated synthetic expressions may be displayed, which may differ from the dynamic object 102 (e.g., the human face and/or associated expressions).

Although illustrated and described relative to the first ray 104 (e.g., a single ray), the above-described process may be repeated for any additional rays obtained relative to the dynamic object 102. For example, obtaining a first ray 104 from the dynamic object 102, obtaining the deformed ray 112 from the first neural network and the sampled points 114 from the deformed ray 112, obtaining the hyperspace code 122 from the second neural network 120, combining the sampled points 114 and the hyperspace code 122 into the network input 124, inputting the network input 124 into the third neural network 130, and obtaining the RGB values 132 may be performed relative to the additional rays obtained relative to the dynamic object 102. For example, the above-described process may be performed for hundreds, thousands, or even millions of rays associated with the dynamic object 102.

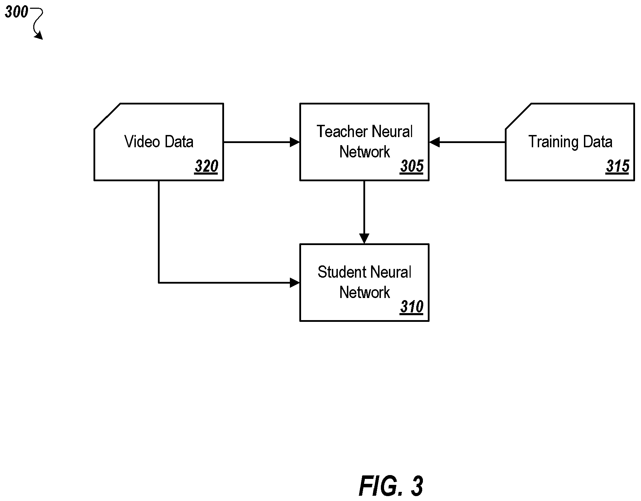

In some embodiments, the third neural network 130 may be trained prior to performing operations and/or producing the RGB values 132. As illustrated in FIG. 3, training the third neural network 130 may include a teacher neural network 305 and a student neural network 310. In some embodiments, the third neural network 130 may be trained using multiple phases.

In a first phase, the teacher neural network 305 may be trained by randomly sampling time and input rays from training data 315 and/or video data 320. Alternatively, or additionally, the training of the teacher neural network 305 may include minimizing the mean squared error between the teacher neural network 305 and the corresponding RGB color of video data 320 of an associated target video. In some embodiments, the teacher neural network 305 may be a dynamic neural radiance field network (NeRF) (e.g., D-NeRF or HyperNeRF). In some embodiments, the video data 320 may be obtained from a target video that may be monocular (e.g., captured from a single view point). In some embodiments, the teacher neural network 305 may be a slow network as the teacher neural network 305 may perform numerical integrations across multiple points associated with the input rays.

In a second phase, the teacher neural network 305 from the first phase may be configured to teach the student neural network 310, where the student neural network 310 may be the third neural network 130 (e.g., a dynamic light field network (DyLiN)) as illustrated in the environment 100. In some embodiments, the teacher neural network 305 may teach the student neural network 310 via knowledge distillation, which may be a process associated with machine learning where knowledge is transferred from a large neural network (e.g., the teacher neural network 305 or the trained dynamic NeRF) to a smaller neural network (e.g., the student neural network 310 or the DyLiN). In some embodiments, the mean squared error may be minimized between the student neural network 310 and the pseudo ground truth RGB values associated with the teacher neural network 305 across one or more rays, where the number of rays may be in the tens, hundreds, thousands, and/or millions of rays.

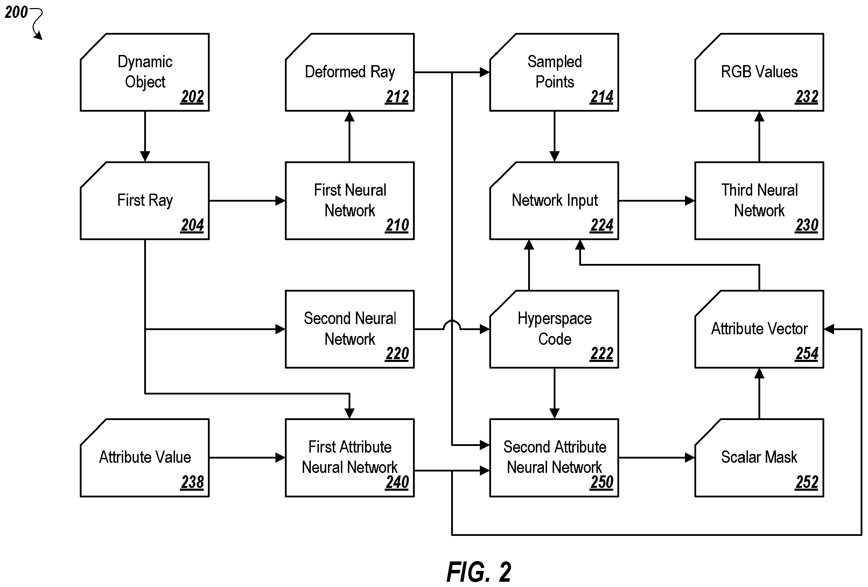

In a third phase, the student neural network 310 may be initialized using parameters obtained through the knowledge distillation from the teacher neural network 305. Alternatively, or additionally, the initialization of the student neural network 310 may be adjusted using the video data 320 (e.g., the associated target video from the first phase) that may have been used to train the teacher neural network 305. For example, the mean squared error may be minimized between the student neural network 310 and the video data 320. The third phase may provide a fine-tuning of the student neural network 310 to increase accuracy and/or efficiency of the student neural network 310, such as the third neural network 130 of FIG. 1 and/or the third neural network 230 of FIG. 2.

In some examples, the avatar control method associated with the environment 100 (e.g., a dynamic light field network, or DyLiN) yields improved results when compared to various neural radiance fields (NeRFs), which may represent conventional approaches to avatar control. For example, as illustrated in the tables below, a comparison of DyLiN to various NeRF implementations shows that a similar peak signal to noise ratio (PSNR) may be achieved, while DyLiN may show an improvement in the structural similarity index (SSIM) and/or multi-scale structural similarity index (MS-SSIM), learned perceptual image patch similarity (LPIPS), and/or greater than an order of magnitude improvement in wall-clock time in most cases (e.g., amount of time taken to render an image using the determined RGB values). Additionally, the values in bold illustrate the best in category among the different avatar control methods.

*Table 1: Synthetic Dynamic Scenes*

| Method | PSNR | SSIM | LPIPS |
|---|---|---|---|
| NeRF | 19.00 | 0.8700 | 0.1825 |
| DirectVoxGo | 18.61 | 0.8538 | 0.1688 |
| Plenoxels | 20.24 | 0.8688 | 0.1600 |
| T-NeRF | 29.51 | 0.9513 | 0.0788 |
| D-NeRF | 30.50 | 0.9525 | 0.0663 |
| TiNeuVox-S | 30.75 | 0.9550 | 0.0663 |
| TiNeuVox-B | **32.67** | 0.9725 | 0.0425 |
| DyLiN | 32.43 | **0.9943** | **0.0184** |

*Table 2: Real Dynamic Scenes*

| Method | PSNR | MS-SSIM |
|---|---|---|
| NeRF | 20.1 | 0.745 |
| NV | 16.9 | 0.571 |
| NSFF | 26.3 | 0.916 |
| Nerfies | 22.2 | 0.803 |
| HyperNeRF | 22.4 | 0.814 |
| TiNeuVox-S | 23.4 | 0.813 |
| TiNeuVox-B | 24.3 | 0.837 |
| DyLiN | **25.1** | **0.910** |

*Table 3: Storage Space and Time Complexity on a Synthetic Scene*

| Method | Storage (MB) | Wall-clock time (ms) |
|---|---|---|
| NeRF | 5.00 | 2950.0 |
| DirectVoxGo | 205.00 | 1090.0 |
| Plenoxels | 717.00 | 50.0 |
| NV | 439.00 | 74.9 |
| D-NeRF | 4.00 | 8150.0 |
| NSFF | 14.17 | 5450.0 |
| HyperNeRF | 15.36 | 2900.0 |
| TiNeuVox-S | 23.70 | 3280.0 |
| TiNeuVox-B | 23.70 | 6920.0 |
| DyLiN | 70.11 | 116.0 |

As a note, while Plenoxels and NV include a smaller wall-clock time relative to DyLiN, the associated quality of Plenoxels and NV are significantly lower than DyLiN, as illustrated in the tables above.

Modifications, additions, or omissions may be made to the environment 100 without departing from the scope of the present disclosure. For example, in some embodiments, a display device may be included such that the RGB values may be displayed thereon. As such, images of the 3D scene representative of the dynamic object 102 may be displayed on the displayed device via the RGB values 132. Additionally, in some embodiments, the environment 100 may include any number of other components that may not be explicitly illustrated or described.

FIG. 2 is a block diagram of an example environment 200 configured to support avatar control, in accordance with at least one embodiment of the present disclosure. The environment 200 may include a first neural network 210, a second neural network 220, a third neural network 230, a first attribute neural network 240, and a second attribute neural network 250.

In some embodiments, one or more components of the environment 200 may be the same or similar as components of the environment 100 of FIG. 1. For example, the first neural network 210, the second neural network 220, and the third neural network 230 may be the same or similar as the first neural network 110, the second neural network 120, and the third neural network 130 of FIG. 1, respectively.

Alternatively, or additionally, inputs and/or outputs of the components of the environment 200 may be the same or similar as inputs and/or outputs of the components of the environment 100 of FIG. 1. For example, the dynamic object 202, the first ray 204, the deformed ray 212, the sampled points 214, the hyperspace code 222, and the RGB values 232 may be the same or similar as the dynamic object 102, the first ray 104, the deformed ray 112, the sampled points 114, the hyperspace code 122, and the RGB values 132 of FIG. 1, respectively.

In instances in which the components, the inputs, and/or the outputs included in the environment 200 differ from the components, the inputs, and/or the output included in the environment 100, the distinctions may be further detailed herein relative to FIG. 2. For example, the hyperspace code 222 may be output from the second neural network 220 similar to the hyperspace code 122 output from the second neural network 120, but the hyperspace code 222 may include one or more changes, such as in view of the attribute value 238, as described herein.

In some embodiments, the first attribute neural network 240 and/or the second attribute neural network 250 may be feedforward artificial neural networks, where nodes included in the first attribute neural network 240 and/or the second attribute neural network 250 may be acyclic. For example, the first attribute neural network 240 and/or the second attribute neural network 250 may include a single layer perceptron network, a multilayer perceptron network, a directed acyclic graph network, and/or any other feedforward artificial neural network. In some embodiments, the first attribute neural network 240 and/or the second attribute neural network 250 may be shallow neural networks, as described herein.

In some embodiments, the first attribute neural network 240 and/or the second attribute neural network 250 may be configured to perform functions and/or operations similar to the first neural network 210 and/or the second neural network 220. For example, the first attribute neural network 240 and/or the second attribute neural network 250 may be configured to obtain one or more inputs and/or produce one or more outputs, as described herein. For example, the first attribute neural network 240 may obtain inputs including the first ray 204, an attribute value 238, and a first time and the first attribute neural network 240 may output a hyperspace attribute value. The hyperspace attribute value may be the same or similar as the hyperspace code 222, with respect to the attribute value 238. That is to say, the hyperspace attribute value may be a multidimensional representation of the input ray in view of the attribute value 238. The hyperspace attribute value may include at least three dimensions associated with a physical location of the origin of the input ray and/or additional dimensional characteristics associated with the input ray, such as time, direction associated with the origin, radiance associated with the input ray, and so forth. In another example, the second attribute neural network 250 may obtain inputs including hyperspace attribute value, the deformed ray 212, and the hyperspace code 222 and may output a scalar mask 252. The scalar mask 252 may be used to localize an effect to the first ray 204 caused by the inclusion of the attribute value 238. For example, in instances in which more than one attribute value 238 may be included in the environment 200, the scalar mask 252 (individually associated with the one or more attribute values 238), may be configured to reduce and/or cancel an effect a second attribute value may cause on a first hyperspace attribute value associated with a first attribute value. As such, the scalar mask 252 may spatially disentangle effects of additional attribute values on the attribute value 238 and/or the hyperspace attribute value.

In some embodiments, the operations and/or functions performed by the first attribute neural network 240 and/or the second attribute neural network 250 may be performed in parallel to the operations and/or functions performed by the first neural network 210 and/or the second neural network 220. Alternatively, or additionally, the operations and/or functions performed by the first attribute neural network 240 and/or the second attribute neural network 250 may be performed partially sequentially or fully sequentially relative to the operations and/or functions performed by the first neural network 210 and/or the second neural network 220. For example, operations of the first attribute neural network 240 may be performed in parallel with the operations of the first neural network 210 and/or the second neural network 220, and operations of the second attribute neural network 250 may be performed following the operations of the first attribute neural network 240 (e.g., where an input to the second attribute neural network 250 may be an output from the first attribute neural network 240).

In some embodiments, the first attribute neural network 240 may be configured to obtain inputs of at least the attribute value 238, the first ray 204, and the first time (e.g., the time associated with the first ray 104). In some embodiments, the first ray 204, the latent codes, and the first time may be concatenated together, and the combination thereof may be input to the first attribute neural network 240. In some embodiments, the first attribute neural network 240 may be configured to output a first hyperspace attribute value which may be associated with the attribute value 238, similarly to the association between the hyperspace code 222 and the first ray 204. In some embodiments, the hyperspace attribute value may not be predicted for individual points of the dynamic object 202 and/or individual points associated with the first ray 204, but rather the hyperspace attribute value may be computed for the entire first ray 104 and the attribute value 238 (and/or subsequently computed for any other ray(s) and/or attribute value(s) obtained relative to the dynamic object 202). In general, the first attribute neural network 240 may accept a ray and an attribute value as at least a portion of an input and may produce a hyperspace attribute value as an output (e.g., which may differ from pointwise hyperspace codes associated with the first ray 204).

In some embodiments, the attribute value 238 may be a scalar input which may provide controllability to the avatar control method described herein. In some embodiments, the attribute value 238 may include a value between -1 and 1 and may be tunable to provide various control to the avatar control method. The attribute value 238 (and/or additional attribute values) may be configured to tune one or more aspects of the RGB values 232 and/or aspects of the avatar associated with the RGB values 232. For example, the attribute value 238 may provide control over an amount of deformation associated with the dynamic object 202 and displayed in the avatar, individual deformation related to a portion of the dynamic object 202 and displayed in the avatar, color and/or color variations to the avatar, a length of time associated with the first ray 204, and/or combinations thereof (such as by including additional attribute values).

In some embodiments, the attribute value 238 may be a strength value that may be associated with a local attribute associated with the dynamic object 202. Although illustrated as one attribute included in the environment 200, the avatar control method described relative to the environment 200 may include any number of attribute values. In instances in which the environment 200 includes N attribute values, the environment 200 may include a corresponding number of first attribute neural networks (e.g., N first attribute neural networks) and/or second attribute neural networks (e.g., N second attribute neural networks), where the N first attribute neural networks and/or the N second attribute neural networks may be individually associated with the N attribute values.

In some embodiments, the second attribute neural network 250 may be configured to obtain inputs of at least the hyperspace attribute value (e.g., the output from the first attribute neural network 240), the deformed ray 212, and the hyperspace code 222. In some embodiments, the second attribute neural network 250 may be configured to output a scalar mask 252, which scalar mask 252 may be associated with the attribute value 238.

In some embodiments, the scalar mask 252 may be combined with the hyperspace attribute value (e.g., the output from the first attribute neural network 240) into an attribute vector 254. In some embodiments, the scalar mask 252 may be combined with the hyperspace attribute value via a pixel-wise multiplication. For example, the attribute vector 254 may be the result of a dot product between the scalar mask 252 and the hyperspace attribute value. In these or other embodiments, the scalar mask 252 and/or the attribute vector 254 may contribute to the disentanglement of effects caused by the attribute value 238 as described herein (e.g., localize the effect of the attribute value 238 relative to the RGB values 232). Alternatively, or additionally, the hyperspace code 222 may be considered a space that may not be affected by the attribute value 238, as described below.

In some embodiments, the hyperspace code 222 and/or the computation of the hyperspace code 222 may differ from the hyperspace code 122 of FIG. 1 due to an inclusion of the attribute value 238. For example, in the absence of an adjustment in view of the attribute value 238, the hyperspace code 222 may be affected by the hyperspace attribute value and/or the attribute value 238. The output from the second neural network 220 (e.g., similar to the output of the second neural network 120, or the hyperspace code 122) may be combined with a variation of the scalar mask 252 to obtain the hyperspace code 222. For example, the output from the second neural network 220 may be combined with an amount associated with the scalar mask 252, such as one minus the scalar mask 252 (e.g., $1 - m$, where $m$ may be the scalar mask 252). In instances in which more than one attribute value 238 is included in the environment 200, the hyperspace code 222 may be obtained by combining the output from the second neural network 220 with an amount associated with the multiple scalar masks, such as one minus a sum of the scalar masks (e.g., $1 - \sum_i^n m_i$, where $m_i$ may be the scalar masks up to a number $n$ of attribute values). In these or other embodiments, the combination of the output from the second neural network 220 with the scalar mask 252 may be by a pixel-wise multiplication of the output from the second neural network 220 with the scalar mask 252 and the result may be the hyperspace code 222.

In some embodiments, the sampled points 214, the hyperspace code 222, and the attribute vector 254 may be combined into a network input 224. In some embodiments, the network input 224 may be a concatenation of the sampled points 214, the hyperspace code 222, and the attribute vector 254. In some embodiments, the third neural network 230 may obtain the network input 224 and/or produce the RGB values 232 as an output, similar to the third neural network 130 of FIG. 1. The RGB values 232 may be used to render one or more images of a 3D scene that may be representative of the dynamic object 202 at a time different from the first time (e.g., the time associated with the first ray 204). For example, in instances in which the dynamic object 202 is a human face including changing expressions, the RGB values 232 output from the third neural network 230 may be displayed such that a synthetic human face and/or the associated synthetic expressions may be displayed, which may differ from the dynamic object 202 (e.g., the human face and/or associated expressions).

Although illustrated and described relative to the first ray 204 (e.g., a single ray), the above-described process may be repeated for any additional rays obtained relative to the dynamic object 202. For example, obtaining a first ray 204 from the dynamic object 202, obtaining the deformed ray 212 from the first neural network and the sampled points 214 from the deformed ray 212, obtaining the hyperspace code 222 from the second neural network 220, obtaining the attribute value 238, obtaining the hyperspace attribute value from the first attribute neural network 240, determining the scalar mask 252 from the second attribute neural network 250, combining the scalar mask 252 with the hyperspace attribute value into the attribute vector 254, combining the sampled points 214, the hyperspace code 222, and the attribute vector 254 into the network input 224, inputting the network input 224 into the third neural network 230, and obtaining the RGB values 232 may be performed relative to the additional rays obtained relative to the dynamic object 202. For example, the above-described process may be performed for hundreds, thousands, or even millions of rays associated with the dynamic object 202.

In some embodiments, the third neural network 230 may be trained similarly to the training described relative to the third neural network 130 of FIG. 1. Alternatively, or additionally, training of the third neural network 230 may include one or more differences as the third neural network 230 may include a controllable aspect via the attribute value 238 and the associated components, as described herein.

Referring to FIG. 3, the teacher neural network 305 associated with the third neural network 230 may include a controllable neural radiance field network (CoNeRF) that may use sampled points from a ray as input and may further include controllable inputs similar to the attribute value 238 included in the environment 200. In some embodiments, the training data 315 may include random samples from a ray color, attribute values, and/or masks individually associated with the attribute values. The teacher neural network 305 may use the training data 315 to produce pseudo ground truth values associated with one or more ray colors and/or one or more 2D masks from the video data 320.

In some embodiments, the teacher neural network 305 may teach the student neural network 310 via knowledge distillation, similar to the teaching associated with the third neural network 130 of FIG. 1. For example, the knowledge distillation may include random sampling of the ray, the associated time, and the attribute values and minimizing the mean squared error between the ray colors of the student neural network 310 and the ray colors of the teacher neural network 305. Alternatively or additionally, the knowledge distillation may include minimizing the mean squared error between the 2D masks of the student neural network 310 and the 2D masks of the teacher neural network 305. In these or other embodiments, one or more of the teacher neural network 305 and/or the student neural network 310 may be controllable neural networks.

In some examples, the avatar control method associated with the environment 200 (e.g., a controllable dynamic light field network, or CoDyLiN) yields improved results when compared to a controllable neural radiance field (CoNeRF), which may represent conventional approaches to avatar control. For example, as illustrated in the tables below, a comparison of CoDyLiN to CoNeRF shows that a similar peak signal to noise ratio (PSNR) may be achieved, while CoDyLiN may show an improvement in the multi-scale structural similarity index (MS-SSIM) and/or greater than an order of magnitude improvement in wall-clock time (e.g., amount of time taken to render an image using the determined RGB values). Additionally, the values in bold illustrate the best in category among the different avatar control methods.

*Table 4: Human Face*

| Method | PSNR | MS-SSIM | Wall-clock time (ms) |
|--------|------|---------|----------------------|
| CoNeRF | **21.4658** | 0.7458 | 6230.0 |
| CoDyLiN | 21.4655 | **0.9510** | **116.3** |

*Table 5: Dynamic Object*

| Method | PSNR | MS-SSIM | Wall-clock time |
|--------|------|---------|-----------------|
| CoNeRF | 23.0319 | 0.8878 | 4360.0 |
| CoDyLiN | **23.5882** | **0.9779** | **116.0** |

Modifications, additions, or omissions may be made to the environment 200 without departing from the scope of the present disclosure. For example, in some embodiments, one or more additional attribute values may be included in the environment 200. In instances in which an additional attribute value is included, a corresponding first attribute neural network and/or a corresponding second attribute neural network may be included in the environment 200. Alternatively, or additionally, the additional attribute value and the corresponding first attribute neural network and/or corresponding second attribute neural network may be configured to output a hyperspace attribute value, a scalar mask, and/or an attribute vector, similarly to the hyperspace attribute value, the scalar mask 252, and the attribute vector 254, respectively. Alternatively, or additionally, the additional attribute vector may be combined with the attribute vector 254, the sampled points 214, and the hyperspace code 222 into the network input 224 for input into the third neural network 230. Additionally, in some embodiments, the environment 200 may include any number of other components that may not be explicitly illustrated or described.

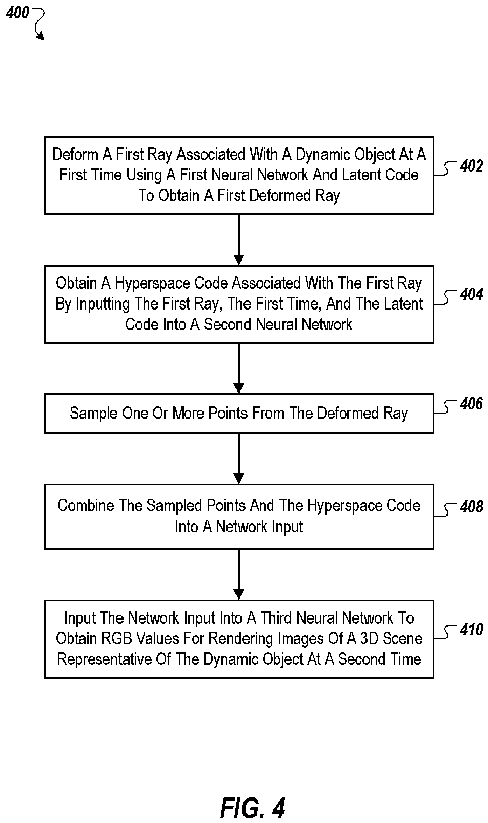

FIG. 4 is a flowchart of an example method 400 of avatar control, in accordance with at least one embodiment of the present disclosure. One or more operations of the method 400 may be performed, in some embodiments, by a device or system, or combination of devices or systems. In these and other embodiments, the method 400 may be performed based on the execution of instructions stored on one or more non-transitory computer-readable media. Although illustrated as discrete blocks, various blocks may be divided into additional blocks, combined into fewer blocks, or eliminated, depending on the desired implementation.

The method 400 may begin at block 402 where a first ray (e.g., the first ray 104 of FIG. 1) associated with a dynamic object (e.g., the dynamic object 102 of FIG. 1) may be deformed at a first time. In some embodiments, the first ray may be deformed using a first neural network (e.g., the first neural network 110 of FIG. 1) and latent code to obtain a deformed ray (e.g., the deformed ray 112 of FIG. 1). In some embodiments, the deformed ray may be a mapping of the first ray via the first neural network into canonical ray space as a function of time. In some embodiments, the first ray may be deformed by the first neural network, where the first neural network may be a feedforward artificial neural network, such as a multi-layer perceptron network, as described herein.

At block 404, a hyperspace code (e.g., the hyperspace code 122 of FIG. 1) associated with the first ray may be obtained by inputting the first ray, the first time, and the latent code into a second neural network (e.g., the second neural network 120 of FIG. 1). In some embodiments, the hyperspace code may be obtained by the second neural network, where the second neural network may be a feedforward artificial neural network, such as a multi-layer perceptron network, as described herein. Alternatively, or additionally, the first neural network and/or the second neural network may be shallow multi-layer perceptron networks.

At block 406, one or more points may be sampled from the deformed ray. In some embodiments, the sampled points (e.g., the sampled points 114 of FIG. 1) may be randomly and/or uniformly sampled from the deformed ray. In some embodiments, the sampled points may be obtained by the first neural network, the second neural network, or a third neural network, as described herein. Alternatively, or additionally, the sampled points may be obtained by any computing device that may randomly and/or uniformly sample points from a ray.

At block 408, the sampled points and the hyperspace code may be combined into a network input (e.g., the network input 124 of FIG. 1). In some embodiments, the network input may be obtained by the first neural network, the second neural network, or a third neural network, as described herein. Alternatively, or additionally, the network input may be obtained by any computing device that may combine the sampled points and the hyperspace code, such as by concatenation.

At block 410, the network input may be input into a third neural network (e.g., the third neural network 130 of FIG. 1) to obtain RGB values (e.g., the RGB values 132 of FIG. 1) for rendering images of a three-dimensional scene. The images of the 3D scene may be representative of the dynamic object at a second time. In some embodiments, the third neural network may be a deep residual color multi-layer perceptron regressor. In some embodiments, the RGB values may be displayed on a display device. In some embodiments, the display of the RGB values may include the images of the three-dimensional scene that may be representative of the dynamic object. In some embodiments, the RGB values may be obtained from the third neural network, where the third neural network may be a feedforward artificial neural network, such as a deep residual color multilayer perceptron regressor network, as described herein.

In some embodiments, the obtained RGB values representative of the 3D object may be used in the display and/or control of an avatar (where the avatar may be a rendering of the 3D object using the systems and/or methods described herein). For example, using the obtained RGB values, an avatar associated with the 3D object may be displayed on a display device and/or manipulated via user input into different views, expressions, movements, and the like, where the avatar display and control may be based on the 3D object.

In some embodiments, one or more of the neural networks in the method 400 may be trained via knowledge distillation from a teacher neural network, such as the first neural network, the second neural network, and/or the third neural network. In some embodiments, the teacher neural network may be trained using training data and/or video data associated with the dynamic object. In some embodiments, following the knowledge distillation from the teacher neural network to the student neural network (e.g., the third neural network), the student neural network may be adjusted using the video data associated with the dynamic object.

Modifications, additions, or omissions may be made to the method 400 without departing from the scope of the present disclosure. For example, in some embodiments, the method 400 may include any number of other components that may not be explicitly illustrated or described.

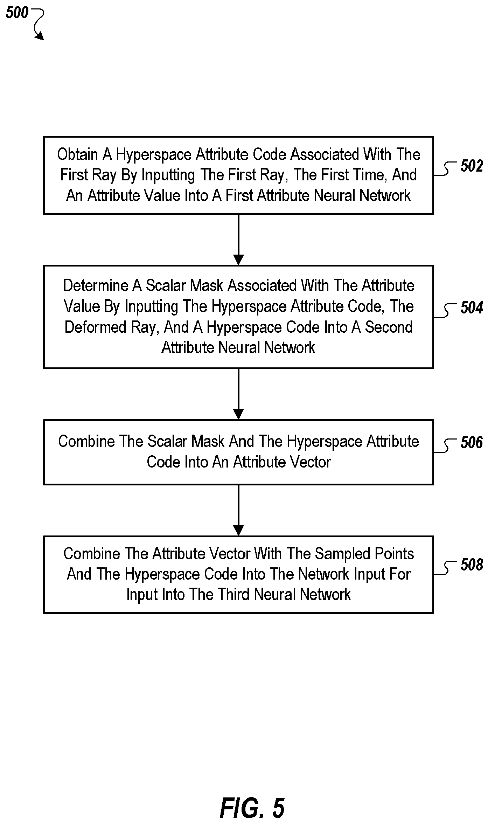

FIG. 5 is a flowchart of an example method 500 of controllable attribute inputs associated with avatar control, in accordance with at least one embodiment of the present disclosure. One or more operations of the method 500 may be performed, in some embodiments, by a device or system, or combination of devices or systems. In these and other embodiments, the method 500 may be performed based on the execution of instructions stored on one or more non-transitory computer-readable media. Although illustrated as discrete blocks, various blocks may be divided into additional blocks, combined into fewer blocks, or eliminated, depending on the desired implementation.

The method 500 may be part of or in addition to another method, such as the method 400 of FIG. 4. For example, the method 500 may introduce one or more operations, inputs, models, etc., any of which may be included as part of another method of avatar control. For example, the method 400 may describe a method of avatar control using a dynamic light field network and the blocks of the method 500 may introduce a control element to the dynamic light field network.

The method 500 may begin at block 502 where a hyperspace attribute value associated with the first ray may be obtained. The hyperspace attribute value may be obtained by inputting the first ray, the first time, and an attribute value (e.g., the attribute value 238 of FIG. 2) into a first attribute neural network (e.g., the first attribute neural network 240 of FIG. 2).

At block 504, a scalar mask (e.g., the scalar mask 252 of FIG. 2) associated with the attribute value may be determined. The scalar mask may be determined by inputting the hyperspace attribute value, the deformed ray, and the hyperspace code into a second attribute neural network (e.g., the second attribute neural network 250 of FIG. 2). In instances in which more than one attribute value is included in the method 500, the second attribute neural network may be configured to disentangle the respective hyperspace attribute values from one another by determining the scalar mask and applying the scalar masks to the hyperspace attribute value and obtaining the attribute vector. For example, the scalar mask may be used to localize an effect to the first ray caused by the inclusion of the attribute value. For example, in instances in which more than one attribute value may be present, the scalar mask (individually associated with the one or more attribute values), may be configured to reduce and/or cancel an effect a second attribute value may cause on a first hyperspace attribute value associated with a first attribute value. As such, the scalar mask may spatially disentangle effects of additional attribute values on the attribute value and/or the hyperspace attribute value.

At block 506, the scalar mask and the hyperspace attribute value may be combined into an attribute vector (e.g., the attribute vector 254 of FIG. 2). In some embodiments, the combination of the scalar mask and the hyperspace attribute value may be by pixel-wise multiplication.

At block 508, the attribute vector may be combined with the sampled points and the hyperspace code into the network input for input into the third neural network. In some embodiments, the hyperspace code may be adjusted with respect to the scalar mask such that the hyperspace code may not be affected by the hyperspace attribute value. For example, the hyperspace code may use the scalar mask to remove any effect that may be caused by the attribute value, and/or caused by additional attribute values that may be present.

Modifications, additions, or omissions may be made to the method 500 without departing from the scope of the present disclosure. For example, in some embodiments, the method 500 may include multiple attribute values such that blocks 502, 504, 506, and/or 508 may be repeated for each additional attribute value that may be included in the method 500. Alternatively, or additionally, the method 500 may include any number of other components that may not be explicitly illustrated or described.

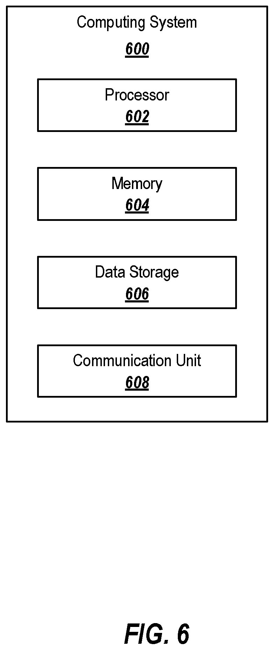

FIG. 6 illustrates an example computing system 600 that may be used for avatar control, in accordance with at least one embodiment of the present disclosure. The computing system 600 may be configured to implement or direct one or more operations associated with avatar control, which may include operation of one or more components included in the environment 100 of FIG. 1 and/or the environment 200 of FIG. 2, such as the first neural network 110/210, the second neural network 120/220, the third neural network 130/230, the first attribute neural network 240, and/or the second attribute neural network 250; performance of the method 400 of FIG. 4; and/or the performance of the method 500 of FIG. 5. The computing system 600 may include a processor 602, memory 604, data storage 606, and a communication unit 608, which all may be communicatively coupled. In some embodiments, the computing system 600 may be part of any of the systems or devices described in this disclosure.

The processor 602 may include any computing entity, or processing device including various computer hardware or software modules and may be configured to execute instructions stored on any applicable computer-readable storage media. For example, the processor 602 may include a microprocessor, a microcontroller, a parallel processor such as a graphics processing unit (GPU) or tensor processing unit (TPU), a digital signal processor (DSP), an application-specific integrated circuit (ASIC), a Field-Programmable Gate Array (FPGA), or any other digital or analog circuitry configured to interpret and/or to execute program instructions and/or to process data.

Although illustrated as a single processor in FIG. 6, it is understood that the processor 602 may include any number of processors distributed across any number of networks or physical locations that are configured to perform individually or collectively any number of operations described herein.

In some embodiments, the processor 602 may be configured to interpret and/or execute program instructions and/or process data stored in the memory 604, the data storage 606, or the memory 604 and the data storage 606. In some embodiments, the processor 602 may fetch program instructions from the data storage 606 and load the program instructions in the memory 604. After the program instructions are loaded into memory 604, the processor 602 may execute the program instructions.

For example, in some embodiments, the processor 602 may be configured to interpret and/or execute program instructions and/or process data stored in the memory 604, the data storage 606, or the memory 604 and the data storage 606. The program instruction and/or data may be related to avatar control such that the computing system 600 may perform or direct the performance of the operations associated therewith as directed by the instructions. In these and other embodiments, the instructions may be used to perform the method 400 of FIG. 4 and/or the method 500 of FIG. 5.

The memory 604 and the data storage 606 may include computer-readable storage media or one or more computer-readable storage mediums for carrying or having computer-executable instructions or data structures stored thereon. Such computer-readable storage media may be any available media that may be accessed by a computer, such as the processor 602.

By way of example, and not limitation, such computer-readable storage media may include non-transitory computer-readable storage media including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices), or any other storage medium which may be used to carry or store particular program code in the form of computer-executable instructions or data structures and which may be accessed by a computer. Combinations of the above may also be included within the scope of computer-readable storage media.

Computer-executable instructions may include, for example, instructions and data configured to cause the processor 602 to perform a certain operation or group of operations as described in this disclosure. In these and other embodiments, the term "non-transitory" as explained in the present disclosure should be construed to exclude only those types of transitory media that were found to fall outside the scope of patentable subject matter in the Federal Circuit decision of *In re Nuijten,* 500 F.3d 1346 (Fed. Cir. 2007). Combinations of the above may also be included within the scope of computer-readable media.

The communication unit 608 may include any component, device, system, or combination thereof that is configured to transmit or receive information over a network. In some embodiments, the communication unit 608 may communicate with other devices at other locations, the same location, or even other components within the same system. For example, the communication unit 608 may include a modem, a network card (wireless or wired), an infrared communication device, a wireless communication device (such as an antenna implementing 4G (LTE), 4.5G (LTE-A), and/or 5G (mmWave) telecommunications), and/or chipset (such as a Bluetooth® device (e.g., Bluetooth 5 (Bluetooth Low Energy)), an 802.6 device (e.g., Metropolitan Area Network (MAN)), a Wi-Fi device (e.g., IEEE 802.11ax, a WiMAX device, cellular communication facilities, etc.), and/or the like. The communication unit 608 may permit data to be exchanged with a network and/or any other devices or systems described in the present disclosure.

Modifications, additions, or omissions may be made to the computing system 600 without departing from the scope of the present disclosure. For example, in some embodiments, the computing system 600 may include any number of other components that may not be explicitly illustrated or described. Further, depending on certain implementations, the computing system 600 may not include one or more of the components illustrated and described.

As indicated above, the embodiments described herein may include the use of a computing system (e.g., the processor 602 of FIG. 6) including various computer hardware or software modules. Further, as indicated above, embodiments described herein may be implemented using computer-readable media (e.g., the memory 604 of FIG. 6) for carrying or having computer-executable instructions or data structures stored thereon.

In some embodiments, the different components, modules, engines, and services described herein may be implemented as objects or processes that execute on a computing system (e.g., as separate threads). While some of the systems and methods described herein are generally described as being implemented in software (stored on and/or executed by hardware), specific hardware implementations or a combination of software and specific hardware implementations are also possible and contemplated.

Terms used in the present disclosure and especially in the appended claims (e.g., bodies of the appended claims) are generally intended as "open" terms (e.g., the term "including" should be interpreted as "including, but not limited to," the term "having" should be interpreted as "having at least," the term "includes" should be interpreted as "includes, but is not limited to," etc.).

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc. Additionally, the use of the term "and/or" is intended to be construed in this manner.

Further, any disjunctive word or phrase presenting two or more alternative terms, whether in the description, claims, or drawings, should be understood to contemplate the possibilities of including one of the terms, either of the terms, or both terms. For example, the phrase "A or B" should be understood to include the possibilities of "A" or "B" or "A and B" even if the term "and/or" is used elsewhere.

All examples and conditional language recited in the present disclosure are intended for pedagogical objects to aid the reader in understanding the present disclosure and the concepts contributed by the inventor to furthering the art, and are to be construed as being without limitation to such specifically recited examples and conditions. Although embodiments of the present disclosure have been described in detail, various changes, substitutions, and alterations could be made hereto without departing from the spirit and scope of the present disclosure.

Further embodiments are as follows:

1. A method comprising:

deforming a first ray associated with a dynamic object at a first time using a first neural network and a latent code to obtain a deformed ray;
obtaining a hyperspace code associated with the first ray by inputting the first ray, the first time, and the latent code into a second neural network;
sampling one or more points from the deformed ray;
combining the sampled points and the hyperspace code into a network input; and
inputting the network input into a third neural network to obtain RGB values for rendering images of a three-dimensional scene representative of the dynamic object at a second time.

2. The method of embodiment 1, further comprising:

obtaining a hyperspace attribute value associated with the first ray by inputting the first ray, the first time, and an attribute value into a first attribute neural network;
determining a scalar mask associated with the attribute value by inputting the hyperspace attribute value, the deformed ray, and the hyperspace code into a second attribute neural network;
combining the scalar mask and the hyperspace attribute value into an attribute vector; and
combining the attribute vector with the sampled points and the hyperspace code into the network input for input into the third neural network.

3. The method of embodiment 2, wherein the hyperspace code is adjusted with respect to the scalar mask such that the hyperspace code is not affected by the hyperspace attribute value.

4. The method of embodiment 1, further comprising:

training a teacher neural network using training data and video data associated with the dynamic object;
training the third neural network from the teacher neural network using knowledge distillation; and
adjusting the third neural network using the video data.

5. The method of embodiment 1, wherein one or more of the first neural network, the second neural network, or the third neural network is trained via knowledge distillation.

6. The method of embodiment 1, further comprising displaying the RGB values on a display device, such that the images of the three-dimensional scene representative of the dynamic object are displayed.

7. The method of embodiment 1, wherein the first neural network and the second neural network are feedforward artificial neural networks.

8. The method of embodiment 7, wherein the first neural network and the second neural network are shallow multi-layer perceptron networks.

9. The method of embodiment 1, wherein the third neural network is a deep residual color multi-layer perceptron regressor.

10. The method of embodiment 1, wherein the deformed ray is a mapping of the first ray via the first neural network into canonical ray space as a function of time.

11. A system comprising:

one or more computer-readable storage media configured to store instructions; and
one or more processors communicatively coupled to the one or more computer-readable storage media and configured to, in response to execution of the instructions, cause the system to perform operations, the operations comprising:

deforming a first ray associated with a dynamic object at a first time using a first neural network and a latent code to obtain a deformed ray;
obtaining a hyperspace code associated with the first ray by inputting the first ray, the first time, and the latent code into a second neural network;
sampling one or more points from the deformed ray;
combining the sampled points and the hyperspace code into a network input; and
inputting the network input into a third neural network to obtain RGB values for rendering images of a three-dimensional scene representative of the dynamic object at a second point in time.

12. The system of embodiment 11, further comprising:

obtaining a hyperspace attribute value associated with the first ray by inputting the first ray, the first time, and an attribute value into a first attribute neural network;
determining a scalar mask associated with the attribute value by inputting the hyperspace attribute value, the deformed ray, and the hyperspace code into a second attribute neural network;
combining the scalar mask and the hyperspace attribute value into an attribute vector; and
combining the attribute vector with the sampled points and the hyperspace code into the network input for input into the third neural network.

13. The system of embodiment 12, wherein the hyperspace code is adjusted with respect to the scalar mask such that the hyperspace code is not affected by the hyperspace attribute value.

14. The system of embodiment 11, further comprising:

training a teacher neural network using training data and video data associated with the dynamic object;
training the third neural network from the teacher neural network using knowledge distillation; and
adjusting the third neural network using the video data.

15. The system of embodiment 11, wherein one or more of the first neural network, the second neural network, or the third neural network is trained via knowledge distillation.

16. The system of embodiment 11, further comprising displaying the RGB values on a display device, such that the images of the three-dimensional scene representative of the dynamic object are displayed.

17. The system of embodiment 11, wherein the first neural network and the second neural network are feedforward artificial neural networks.

18. The system of embodiment 17, wherein the first neural network and the second neural network are shallow multi-layer perceptron networks.

19. The system of embodiment 11, wherein the third neural network is a deep residual color multi-layer perceptron regressor.

20. A system comprising:

means for deforming a first ray associated with a dynamic object at a first time using a first neural network and a latent code to obtain a deformed ray;
means for obtaining a hyperspace code associated with the first ray by inputting the first ray, the first time, and the latent code into a second neural network;
means for sampling one or more points from the deformed ray;
means for combining the sampled points and the hyperspace code into a network input; and
means for inputting the network input into a third neural network to obtain RGB values for rendering images of a three-dimensional scene representative of the dynamic object at a second time.

**Claims**

**1.** A method comprising:

deforming a first ray associated with a dynamic object at a first time using a first neural network and a latent code to obtain a deformed ray;

obtaining a hyperspace code associated with the first ray by inputting the first ray, the first time, and the latent code into a second neural network;

sampling one or more points from the deformed ray;

combining the sampled points and the hyperspace code into a network input; and

inputting the network input into a third neural network to obtain RGB values for rendering images of a three-dimensional scene representative of the dynamic object at a second time.

2. The method of claim 1, further comprising:

obtaining a hyperspace attribute value associated with the first ray by inputting the first ray, the first time, and an attribute value into a first attribute neural network;

determining a scalar mask associated with the attribute value by inputting the hyperspace attribute value, the deformed ray, and the hyperspace code into a second attribute neural network;

combining the scalar mask and the hyperspace attribute value into an attribute vector; and

combining the attribute vector with the sampled points and the hyperspace code into the network input for input into the third neural network.

3. The method of claim 2, wherein the hyperspace code is adjusted with respect to the scalar mask such that the hyperspace code is not affected by the hyperspace attribute value.

4. The method of claim 1, further comprising:

training a teacher neural network using training data and video data associated with the dynamic object;

training the third neural network from the teacher neural network using knowledge distillation; and

adjusting the third neural network using the video data.

5. The method of claim 1, wherein one or more of the first neural network, the second neural network, or the third neural network is trained via knowledge distillation.

6. The method of claim 1, further comprising displaying the RGB values on a display device, such that the images of the three-dimensional scene representative of the dynamic object are displayed.

7. The method of claim 1, wherein the first neural network and the second neural network are feedforward artificial neural networks.

8. The method of claim 7, wherein the first neural network and the second neural network are shallow multi-layer perceptron networks.

9. The method of claim 1, wherein the third neural network is a deep residual color multi-layer perceptron regressor.

10. The method of claim 1, wherein the deformed ray is a mapping of the first ray via the first neural network into canonical ray space as a function of time.

11. A system comprising:

one or more computer-readable storage media configured to store instructions; and

one or more processors communicatively coupled to the one or more computer-readable storage media and configured to, in response to execution of the instructions, cause the system to perform operations, the operations comprising:

deforming a first ray associated with a dynamic object at a first time using a first neural network and a latent code to obtain a deformed ray;

obtaining a hyperspace code associated with the first ray by inputting the first ray, the first time, and the latent code into a second neural network;

sampling one or more points from the deformed ray;

combining the sampled points and the hyperspace code into a network input; and

inputting the network input into a third neural network to obtain RGB values for rendering images of a three-dimensional scene representative of the dynamic object at a second point in time.

12. A system comprising:

means for deforming a first ray associated with a dynamic object at a first time using a first neural network and a latent code to obtain a deformed ray;
means for obtaining a hyperspace code associated with the first ray by inputting the first ray, the first time, and the latent code into a second neural network;
means for sampling one or more points from the deformed ray;
means for combining the sampled points and the hyperspace code into a network input; and
means for inputting the network input into a third neural network to obtain RGB values for rendering images of a three-dimensional scene representative of the dynamic object at a second time.

100

Dynamic Object **102** → First Ray **104**

First Ray **104** → First Neural Network **110** → Deformed Ray **112** → Sampled Points **114**

First Ray **104** → Second Neural Network **120** → Hyperspace Code **122** → Network Input **124**

Sampled Points **114** → Network Input **124** → Third Neural Network **130** → RGB Values **132**

FIG. 1

FIG. 2

300

| Video Data | | Teacher Neural Network | | Training Data |
| --- | --- | --- | --- | --- |
| **320** | | **305** | | **315** |

Student Neural Network
**310**

*FIG. 3*

*400*

Deform A First Ray Associated With A Dynamic Object At A First Time Using A First Neural Network And Latent Code To Obtain A First Deformed Ray  — *402*

Obtain A Hyperspace Code Associated With The First Ray By Inputting The First Ray, The First Time, And The Latent Code Into A Second Neural Network  — *404*

Sample One Or More Points From The Deformed Ray  — *406*

Combine The Sampled Points And The Hyperspace Code Into A Network Input  — *408*

Input The Network Input Into A Third Neural Network To Obtain RGB Values For Rendering Images Of A 3D Scene Representative Of The Dynamic Object At A Second Time  — *410*

*FIG. 4*

500

Obtain A Hyperspace Attribute Code Associated With The First Ray By Inputting The First Ray, The First Time, And An Attribute Value Into A First Attribute Neural Network ⟋ 502

Determine A Scalar Mask Associated With The Attribute Value By Inputting The Hyperspace Attribute Code, The Deformed Ray, And A Hyperspace Code Into A Second Attribute Neural Network ⟋ 504

Combine The Scalar Mask And The Hyperspace Attribute Code Into An Attribute Vector ⟋ 506

Combine The Attribute Vector With The Sampled Points And The Hyperspace Code Into The Network Input For Input Into The Third Neural Network ⟋ 508

*FIG. 5*

```
┌─────────────────────────────────────┐
│          Computing System           │
│               600                   │
│                                     │
│   ┌─────────────────────────────┐   │
│   │         Processor           │   │
│   │            602              │   │
│   └─────────────────────────────┘   │
│                                     │
│   ┌─────────────────────────────┐   │
│   │          Memory             │   │
│   │            604              │   │
│   └─────────────────────────────┘   │
│                                     │
│   ┌─────────────────────────────┐   │
│   │        Data Storage         │   │
│   │            606              │   │
│   └─────────────────────────────┘   │
│                                     │
│   ┌─────────────────────────────┐   │
│   │     Communication Unit      │   │
│   │            608              │   │
│   └─────────────────────────────┘   │
│                                     │
└─────────────────────────────────────┘
```

*FIG. 6*

**EUROPEAN SEARCH REPORT**

Application Number

EP 23 21 2972

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KEUNHONG PARK ET AL: "Nerfies: Deformable Neural Radiance Fields", IEEE/CVF INTERNATIONAL CONFERENCE ON COMPUTER VISION (ICCV), 10 September 2021 (2021-09-10), pages 5845-5854, XP0034093136, DOI: 10.1109/ICCV48922.2021.0058 | 1,4-12 | INV. G06T19/20 G06N3/00 |
| Y | * page 5845 * <br> * page 5846, left-hand column, paragraph 1 * <br> * page 5847; figure 2 * <br> * page 5849; figure 5 * | 2,3 | |
| Y | KACPER KANIA ET AL: "CoNeRF: Controllable Neural Radiance Fields", ARXIV.ORG, CORNELL UNIVERSITY LIBRARY, 201 OLIN LIBRARY CORNELL UNIVERSITY ITHACA, NY 14853, 3 December 2021 (2021-12-03), XP091112339, * page 2, left-hand column, paragraph 3 * <br> * page 4, paragraph 3.3 * | 2,3 | |
| | | | TECHNICAL FIELDS SEARCHED (IPC) |
| X | KEUNHONG PARK ET AL: "HyperNeRF: A Higher-Dimensional Representationfor Topologically Varying Neural Radiance Fields", ACM TRANSACTIONS ON GRAPHICS, vol. 40, no. 6, 238, 1 December 2021 (2021-12-01), - 1 December 2021 (2021-12-01), pages 1-12, XP0058659690, * figure 5 * | 1,6,7, 10-12 | G06N |

The present search report has been drawn up for all claims

| Place of search | Date of completion of the search | Examiner |
|---|---|---|
| The Hague | 15 May 2024 | Sindic, Gilles |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)